# EUROPÄISCHE PATENTSCHRIFT

(11) **EP 2 328 715 B1**
(45) Veröffentlichungstag und Bekanntmachung des Hinweises auf die Patenterteilung: **11.10.2017**
(21) Anmeldenummer: 09778124.9
(22) Anmeldetag: 26.08.2009
(51) Int. Cl.: B23K 37/053

(54) **VORRICHTUNG ZUM SCHWEISSEN DER STIRNSEITEN VON DÜNNWANDIGEN UMMANTELUNGEN**
DEVICE FOR WELDING END FACES OF THIN WALLED CASING
DISPOSITIF POUR LE SOUDAGE D'ENVELOPPES Ä PAROI MINCE

(30) Priorität: 27.08.2008 RU 2008134620
(43) Veröffentlichungstag der Anmeldung: 08.06.2011
(73) Patentinhaber: ARMOTECH s.r.o., 140 000 Praha 4 (CZ)
(72) Erfinder: LUKIYANETS, Sergey, V., Prag 5-Zlicin (CZ); MOROZ, Nikolay, G., Mizosov (CZ)
(74) Vertreter: Kratochvil, Vaclav
(86) Internationale Anmeldenummer: PCT/EP2009/006183
(87) Internationale Veröffentlichungsnummer: WO 2010/022929

(56) Entgegenhaltungen:
- DE-A1- 3 937 094
- DE-A1- 4 006 900
- DE-U1- 29 716 233
- US-A- 3 761 005

## Beschreibung

### Gebiet der Technik

Die Erfindung betrifft eine Vorrichtung zum Schweißen von Stirnseiten dünnwandiger Ummantelungen an einer Schweißebene, deren Gattung der DE-A-4006900 zu entnehmen ist. Mit der Vorrichtung können Schweißprodukte insbesondere durch Verbindungsschmelzschweißens in einem Medium aus Schutzgasen mit Zugabe von Reagenzien von Halogenen in die Schweißzone hergestellt werden. Die Vorrichtung kann insbesondere kann zum Schweißen von dünnwandigen Ummantelungen, Rohr-Halbzeugen und Ähnlichem aus nicht rostenden Stählen verwendet werden.

### Stand der Technik

Um ein Schweißen besonders dünnwandiger Produkte mit großen Querschnitten durchzuführen, muss eine vollständige Übereinstimmung der Verbindungskanten der Produkte sowohl bezüglich der Dicke als auch bezüglich des Umfangs unter Berücksichtigung der Koaxialität und der Genauigkeit der Zentrierung der zu schweißenden Teile ermöglicht werden.

Es ist ebenfalls allgemein bekannt, dass beim Verbindungsschweißen von Ummantelungen oder Blechen ein zweiachsiger Spannungszustand des Metalls in der Schweißzone auftritt, der die Folge der Verschiebung der zu schweißenden Ränder bei der Erhitzung der sich bewegenden Wärmequelle ist. Bei Blechen, die ohne Zwischenraum verbindungsgeschweißt werden, können die Ränder vor der Wärmequelle sich nicht ungehindert verschieben, und in ihnen vollzieht sich eine elastische Kompression des Metalls, und es geschieht eine absenkende plastische Verformung des Metalls. Während des Durchgangs der Wärmequelle ist eine vergleichsweise schmale Zone des Metalls von den Verschiebungen betroffen, nämlich die auf eine hohe Temperatur erhitzte. Daher übt eine Verstärkung der Bleche praktisch keinen Einfluss auf die Querbewegung der Ränder während des Schweißens aus. Beim Schweißen von zylindrischen Ummantelungen tritt außer den plastischen Verformungen der axialen Absenkung des Metalls auch eine Änderung ihres Durchmessers auf, was zu achsenasymmetrischen Verformungen der zu schweißenden Schnitte führt.

Die Verformungen durch ungleichmäßiges Erhitzen in der Breite und Länge der Schweißnaht sind ihrem Wesen nach Biegeverformungen. Die Biegung geschieht infolgedessen, dass die erhitzte Seite sich verbreitert, während die kalte dieser Verbreiterung entgegenwirkt. In dem Maß, wie sich die Breite der erhitzten Zone bei konstanter Kraft der Wärmequelle verringert, verringern sich die Verformungen, die durch das Rotieren der Schnitte hervorgerufen werden. Bei sehr schmalen Erhitzungszonen kann es passieren, dass die zu schweißenden Ummantelungen keine wesentlichen Winkelverformungen aufweisen.

Die obigen Ausführungen ermöglichen das Stellen der Aufgabe, die optimalen Abmessungen der Zonen auszuwählen, von denen ein Ableiten der Hitze erforderlich ist, und auch Konstruktionen von Vorrichtungen zur Lösung dieser Aufgabe zu schaffen, um ein Ausbuchten beim Schweißen zu verhindern und die Restspannungen in den zu schweißenden Konstruktionen zu verringern.

Es sind Verfahren zum Schweißen von Röhren und Behältern unter Nutzung von Vorrichtungen bekannt, die eine Zentrierung bezüglich des Außendurchmessers bewirken. (B.E. Paton, Technologija elektriceskoj svarki metallov i splavov plavneniem, Moskau, Masinostroenie, 1974.)

Die Lösungen gemäß den genannten Verfahren unter Nutzung der bekannten Vorrichtungen sind für Fälle des Schweißens von dünnwandigen Konstruktionen praktisch nicht anwendbar.

Als nächster Stand der Technik bezüglich der Aufgabenstellung der Erfindung und des Lösungswegs wurde eine Vorrichtung gewählt, die zylindrische Ausrichtungsbuchsen mit einer Befestigungseinheit umfasst, die ein Zentrieren von Rohren beim Schweißen ermöglicht und die aus der RU 2 303739 C1 bekannt ist.

Ein Nachteil dieser Lösung ist, dass sie im Fall des Schweißens von dünnwandigen Ummantelungskonstruktionen nicht angewandt werden kann.

### Offenbarung der Erfindung

Aufgabe der Erfindung ist es, eine konstruktiv einfache Vorrichtung zur Durchführung eines Schmelzschweißverfahrens zur Erzeugung ringförmiger Verbindungen dünnwandiger Ummantelungen zur Herstellung verschiedener geschlossener Behälter zur Verfügung zu stellen.

Diese Aufgabe wird durch eine Vorrichtung zum Schweißen von Stirnseiten dünnwandiger Ummantelungen an einer Schweißebene gelöst, die zwei zylindrische Positionieraufnahmeeinrichtungen umfasst, die die zu schweißenden Ummantelungen bezüglich ihres Außendurchmessers zentrieren, wobei beide Aufnahmeeinrichtungen auf einer Ausrichtungsbasis miteinander fluchtend und axial verschiebbar angeordnet sind, wobei an der Außenseite jeder Aufnahmeeinrichtung ein verformbarer, ringförmiger, membranartiger Wärmetauscher angeordnet ist, der von einem Satz voneinander getrennter Blattlamellen aus hitzebeständigem Material gebildet wird, deren unteres Ende für einen thermischen Kontakt mit der Ummantelung angeordnet ist.

Bevorzugte Ausführungsformen der erfindungsgemäßen Vorrichtung sind Gegenstand der Patentansprüche 2 bis 10.

Mit der erfindungsgemäßen Vorrichtung kann die Qualität der Schweißnaht erhöht werden, da deren Struktur dicht und feinkörnig wird und keine Mikrodefekte vorhanden sind, Außerdem wird die Montage der Ummantelungen vereinfacht.

Die Befestigungseinheit kann in Form von Federringen und einer bewegbaren Anschlagbuchse ausgeführt sein.

Die Blattlamellen des membranartigen Wärmetauschers weisen entlang der Achse der zentrierenden Ausrichtungsbuchse ein Profil in Form eines Kipphebels auf und sind in einer ringförmigen Nut der Ausrichtungsbuchse mittels eines elastischen Federrings so befestigt, dass sie bezüglich ihrer äußeren Oberfläche gedreht werden können.

Die unteren Enden der Blattlamellen des membranartigen Wärmetauschers umfassen auf der Seite der Schweißfläche Lippen, die aneinander gedrückt sind und mittels eines elastischen Federrings gespannt werden, wobei sie zusammen mit der Anschlagbuchse eine Konstruktion in Form einer Zange bilden.

Auf der Seite der Schweißfläche ist der Durchmesser der inneren Oberfläche des ringförmigen membranartigen Wärmetauschers, der durch die Lippen der Blattlamellen gebildet wird, gleich dem Außendurchmesser der zu schweißenden dünnwandigen, zylindrischen Ummantelungen.

Die Blattlamellen des membranartigen Wärmetauschers haben über ihre gesamte Länge die gleiche Breite.

Die Stirnseite der Zange, die durch die Enden der Lamellen des membranartigen Wärmetauschers auf der Seite der Schweißfläche gebildet wird, ist bezüglich der Stirnseite zu der Seite der Schweißfläche verschoben, d.h. sie steht dabei über die Stirnseite der zentrierenden Ausrichtungsbuchse um einen Abstand vor, der gleich dem 5- bis 10-fachen der Dicke der zu schweißenden Teile ist.

Jede Positionierungs-Aufnahmeeinrichtung ist mit einer bewegbaren Anschlagbuchse mit einer inneren konischen Oberfläche versehen, wobei die Spitze dieses Konus zu der Seite der gegenüberliegenden Schweißfläche gerichtet ist, wobei diese Oberfläche die Enden der Blattlamellen des membranartigen Wärmetauschers umgibt, wobei eine axiale Verschiebung der Anschlagbuchse bezüglich der zu schweißenden zylindrischen, dünnwandigen metallischen Ummantelungen möglich ist.

### Kurze Beschreibung der Zeichnungen der Erfindung

- Fig. 1: zeigt einen Querschnitt einer erfindungsgemäßen Vorrichtung in einer Schweißzone.
- Fig. 2: zeigt perspektivisch in Teilschnittansicht ein Beispiel der Anordnung von Lamellen eines membranartigen Wärmetauschers in einer Aufnahmeeinrichtung.

### Offenbarung der Erfindung

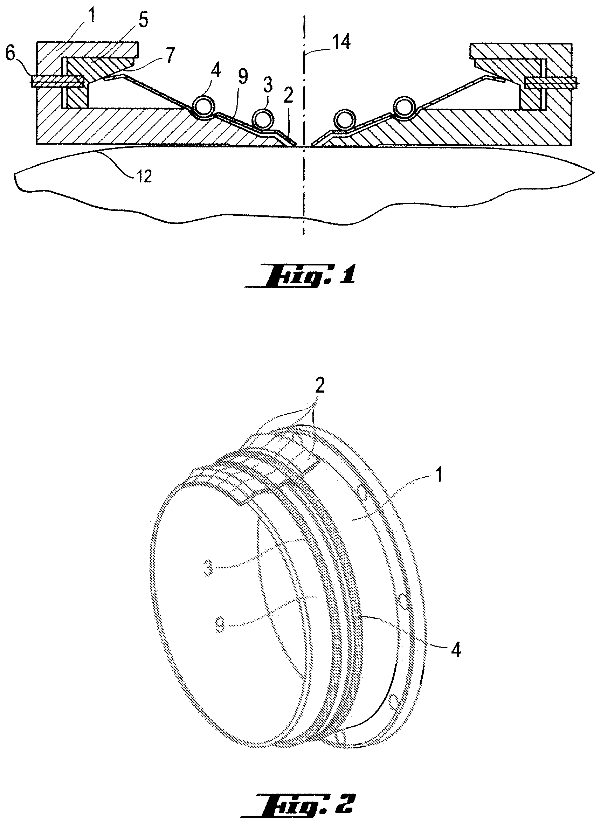

Der Aufbau der Vorrichtung, die in Fig. 1 im Querschnitt gezeigt ist, umfasst zwei Positionierungs-Aufnahmeeinrichtungen 1, die in Form von zylindrischen Profil-Ausrichtungsbuchsen ausgeführt sind und zu schweißende zylindrische Ummantelungen 12 entsprechend ihrem Außendurchmesser zentrieren. Beide in Fig. 1 dargestellten Positionierungs-Aufnahmeeinrichtungen 1 sind identisch ausgeführt und sind axial zueinander so angeordnet, dass wärmeableitende Lippen von auf ihnen angeordneten Blattlamellen 2 einander zugewandt sind. Zwischen ihnen verläuft eine vertikale Schweißebene 14 in der die miteinander zu verschweißenden Stirnseiten der Ummantelungen 12 liegen.

In Fig. 1 sind die Bezugszeichen nur für die linke Vorrichtung angegeben, da die Vorrichtung des rechten Teils von Fig. 1 spiegelbildlich zu der linken ist.

Der Querschnitt der Positionierungs-Aufnahmeeinrichtung 1 ist insgesamt U-förmig mit einem längerem und einem kürzeren Schenkel ausgebildet, die durch einen Steg verbunden werden. Der längere Schenkel verläuft parallel zu der Mittelachse der Aufnahmeeinrichtung und bildet den inneren Teil der Aufnahmeeinrichtung 1. Auf der linken Stirnseite geht der längere Schenkel in den vertikalen Steg über, an den im Abstand zu dem längeren Schenkel der kürzere Schenkel anschließt, der sich ebenfalls parallel zur Mittelachse in Richtung der anderen Aufnahmeeinrichtung 1 erstreckt und somit den äußeren Teil des Schnitts der Aufnahmeeinrichtung 1 bildet.

An dem Außenumfang der äußeren Oberfläche 9 des längeren Schenkels der Aufnahmeeinrichtung 1 sind Profil-Blattlamellen 2 angeordnet, die mittels eines Federrings 4 aneinander gedrückt und auf der Oberfläche des langen Schenkels befestigt sind. Die Stelle, an der die Lamellen 2 von dem Federring 4 auf den langen Schenkel gedrückt werden, bilden einen Lagerpunkt um den die Lamellen 2 kipphebelartig verschwenkbar sind. Der sich von dem Federring 4 zur Schweißebene 14 erstreckende Abschnitt der Lamellen 2 ist mit geringem Abstand zu dem langen Schenkel angeordnet. Für ein dichtes Anliegen der unteren Enden der Lamellen 2 an der Seite der Schweißebene 14 sind die Lamellen 2 zwischen Federring 4 und der der Schweißebene zugewandten Stirnseite der Aufnahmeeinrichtung 1 außerdem mittels eines Federrings 3 zusammengedrückt. Zusammen bilden die Lamellen 2 in montiertem Zustand einen ringförmigen, leicht verformbaren membranartigen Wärmetauscher.

Auf der Seite der oberen, freien Enden der Lamellen 2 ist in der Aufnahmeeinrichtung 1 eine parallel zur Mittelachse bewegbare Anschlagbuchse 5 mit einer inneren konischen Oberfläche 7 angeordnet, wobei die Spitze des Konus zu der Seite Schweißebene 14 gerichtet ist. Der schräge Abschnitt des Konus greift an dem freien oberen Enden der Lamellen 2 an. Die Anschlagbuchse 5 und der aus den Lamellen 2 zusammengesetzte, membranartige Wärmetauscher bilden so eine Zangenkonstruktion, bei der auf der Seite der Schweißebene 14 der Durchmesser der durch die unteren Enden oder Lippen der Blattlamellen 2 gebildeten inneren Oberfläche gleich dem Außendurchmesser der zu schweißenden dünnwandigen, zylindrischen Ummantelungen 12 ist. Zum Verschieben der bewegbaren Anschlagbuchse 5 in der Aufnahmeeinrichtung 1 sind Führungen 6 vorgesehen. Die bewegbare Anschlagbuchse 5 wird in einer Vertiefung verschoben, die zwischen dem kurzen und dem langen Schenkel gebildet ist. Die Führungen 6 sind an einem Ende an der Anschlagbuchse 5 befestigt, während ihr anderes Ende durch den Steg der Stirnfläche der Aufnahmeeinrichtung 1 in einer Richtung parallel zu der Achse der zylindrischen Aufnahmeeinrichtung hindurchgeht und darin verschoben werden kann.

Die Vorrichtung funktioniert wie folgt. Die Vorrichtung wird in einer Werkbank (nicht gezeigt) angeordnet, die eine Drehbewegung ermöglicht. Dabei werden beide Aufnahmeeinrichtungen 1 sowohl nach Übereinstimmung der Achsen als auch nach Übereinstimmung der inneren Zentrierungs-Oberflächen der Ausrichtungsbuchsen fluchtend zentriert, wobei beide Aufnahmeeinrichtungen 1 so ausgerichtet sind, dass die Lippen der Blattlamellen 2 zueinander gerichtet sind, wie in Fig. 1 dargestellt. In jede Aufnahmeeinrichtung 1 wird eine zu schweißende Ummantelung 12 eingesetzt. Dabei werden mittels Verschiebung der Anschlagbuchse 5 in der Aufnahmeeinrichtung 1 zu der Seite der Schweißebene 14 die Lamellen 2 des membranartigen Wärmetauschers um den Lagerpunkt unter dem Federring 4 verschwenkt und gegen die Kraft des Federrings 3 geöffnet und sind einer Längsverschiebung der zu schweißenden Ummantelungen 12 nicht hinderlich. Nach dem Anordnen der zu schweißenden Werkstücke werden diese an der Schweißebene 14 aneinander angelegt, bis die zu schweißenden Stirnseiten vollständig übereinstimmen. In dieser Position wird die Aufnahmeeinrichtung 1 fixiert. Mittels Verschiebung der Anschlagbuchse 5 und/oder des Federrings 3 seitlich von der Schweißfläche 14 weg wird in jeder der beiden Aufnahmeeinrichtungen 1 der membranartige Wärmetauscher an den vorher bestimmten Stellen in Kontakt mit den zu schweißenden Werkstücken gebracht. Dabei wird die Kontaktfläche (die Wärmeableitzone) durch die Breite und Form der bewegbaren Lamellen 2 definiert.

In Fig. 2 ist perspektivisch in Teilschnittansicht der innere Teil der Aufnahmeeinrichtung 1 dargestellt, wobei nur ein Teil der Profil-Blattlamellen 2 auf ihrer Oberfläche angeordnet sind. Der Klarheit halber ist hier nur ein Teil der Blattlamellen 2 gezeigt, ebenso nur der innere Teil der Aufnahmeeinrichtung 1. Die Profil-Blattlamellen 2 sind federelastisch ausgeführt und sind in der Richtung der Achse der Aufnahmeeinrichtung 1 und von dieser weg biegbar. Die Lamellen 2 werden mittels der Federn 3 und 4 an der Außenseite 9 des inneren Teils der Aufnahmeeinrichtung 1 gehalten. Dabei liegt die Stirnseite des membranartigen Wärmetauschers, die von den unteren Enden der Lamellen 2 gebildet wird, in einem Abstand in der Größenordnung des 5- bis 10-fachen der Dicke der zu schweißenden Ummantelungen außen vor der Stirnseite der entsprechenden Aufnahmeeinrichtung 1. Die Wanddicke der Ummantelung kann beispielsweise zwischen 0,1 mm und 1 mm liegen. Entsprechend kann der Überstand der Lamellen 2 über der Stirnseite der Aufnahmeeinrichtung 1 für die Dicke von 0,1 mm 0,5 bis 1 mm betragen, für die Dicke von 0,5 mm 2,5 bis 5 mm betragen und für die Dicke von 1 mm 5 bis 10 mm betragen.

Beim Einschalten einer bewegbaren Wärmequelle wird normalerweise in den zu schweißenden Ummantelungen eine bestimmte Zone des Metalls nicht achsensymmetrisch erhitzt, und die Ummantelungen selbst beginnen sich achsenasymmetrisch zu verformen. Die Form der bei der Erhitzung verformten Ummantelung wird unrund, d.h. in der Zone der lokalen Erhitzung ist die Krümmung der Ummantelung geringer als in der nicht betroffenen Zone. Dadurch, dass bei der erfindungsgemäßen Vorrichtung in einigem Abstand von der Schweißebene 14 der membranartige Wärmetauscher angeordnet ist, entnimmt er dem zu schweißenden Material Wärme und verhindert, dass es sich über große Bereiche ausdehnt. Aufgrund der Bewegbarkeit jeder Lamelle 2 in der Kontaktzone verhindert der Wärmetauscher dabei entstehende, achsenasymmetrischen Verformungen der zu schweißenden Ummantelungen 12 und verursacht keine zusätzlichen Störungen, sondern ermöglicht nur die Wärmeabfuhr aus der zu schweißenden Zone des Materials.

Der funktionale Zweck des Wärmetauschers liegt in der Begrenzung der Zone der Wärmeausbreitung auf beiden Seiten der Erzeugenden der zu schweißenden Ummantelungen von ihrem Verbindungspunkt (der Schweißfläche). Beim Schweißvorgang werden die Stirnseiten der zu schweißenden Ummantelungen bis zu der dem Metall der zu schweißenden Ummantelung entsprechenden Schmelztemperatur erhitzt (bis 1000 ° C und mehr). Aufgrund der Wärmeleitfähigkeit der Materialien der zu schweißenden Ummantelungen breitet sich die Wärme auf beiden Seiten der Schweißnaht aus und bewirkt eine Hitzeverformung dieser Ummantelungen. Da die Wärme von einer lokalen Quelle zugeführt wird, führt die Hitzeverformung zu einem lokalen Aufblähen der Stirnseite der Ummantelung. Für eine Verringerung dieser Wirkung ist es erforderlich, die seitliche Erhitzungszone über die Länge der Erzeugenden der zu schweißenden Ummantelungen zu begrenzen. Diese Funktion erfüllt erfindungsgemäß auch der Wärmetauscher aus Material mit hoher Wärmekapazität, beispielsweise Kupfer. In der Kontaktzone des Wärmetauschers, d.h. der Lamellen 2 mit der zu schweißenden Ummantelung 12 breitet sich die Wärme sowohl in dem Material des Wärmetauschers als auch über die Länge der Ummantelung 12 aus. Wegen der verschiedenen Wärmekapazitäten der Materialien des Wärmetauschers und der zu schweißenden Ummantelung 12 und wegen des großen Unterschieds ihrer Dicken (bzw. Massen in der Kontaktzone) wird die größte Wärmemenge von dem Wärmetauscher absorbiert, und lediglich ein restlicher Teil der Wärme breitet sich in dem Material der zu schweißenden Ummantelung 12 aus. Dadurch werden auch die lokale Erhitzungszone der Ummantelung 12 und die Zone ihrer lokalen temperaturbedingten Verwölbung begrenzt. Die Wärmeabfuhr in der Kontaktzone der Lamellen 2 des membranartigen Wärmetauschers und der zu schweißenden Ummantelungen 12 geschieht, wie oben erwähnt, durch eine hohe Wärmekapazität bzw. hohe Wärmeleitung des Materials der Lamellen und durch die natürliche Konvektionskühlung durch ein Strömen der Luft um die bewegbaren Lamellen 2 des Wärmetauschers, die durch einen Spalt von den Ausrichtungsbuchsen beabstandet angeordnet sind. Für eine zusätzliche Kühlung der Lamellen 2 des Wärmetauschers ist die Anwendung einer Lösung möglich, bei der die oberen Enden der Lamellen 2, die nicht mit den zu schweißenden Ummantelungen 12 in Kontakt stehen, über eine bestimmte Länge an der bewegbaren Anschlagbuchse 5 anliegen und in Kontakt mit einer Kühlvorrichtung (nicht gezeigt) treten, die beispielsweise durch kaltes Wasser gekühlt wird.

Die Anwendung dieser Lösung ermöglicht es, das Schmelzschweißverfahren zum Verbinden von dünnwandigen Ummantelungen qualitativ ausreichend hochwertig durchzuführen.

Die Nutzung der erfindungsgemäßen Vorrichtung bietet eine reale Möglichkeit, Schweißkonstruktionen von der Art geschlossener Behälter in Form von dünnwandigen geschlossenen Liner-Ummantelungen zu erzielen. Die Anwendung der erfindungsgemäßen Lösung wurde an Beispielen für das Schweißen von Ummantelungen mit einer Wanddicke von 0,5 mm und Durchmessern von 213 und 322 mm getestet. Die Fertigung und Erprobung dieser dünnwandigen Ummantelungen, die unter Verwendung des erfindungsgemäßen Verfahrens hergestellt wurden, bestätigten ihre hohe Zuverlässigkeit und Wirksamkeit.

### Gewerbliche Anwendbarkeit

Die erfindungsgemäße Lösung findet breite Anwendung beim Schweißen von dünnwandigen Röhren, Empfängern, Ausdehnungsgefäßen, Ballons und anderen Produkten in verschiedenen technischen Bereichen.

## Patentansprüche

1. Vorrichtung zum Schweißen von Stirnseiten dünnwandiger Ummantelungen (12) an einer Schweißebene, mit zwei zylindrischen Positionieraufnahmeeinrichtungen (1), die die zu schweißenden Ummantelungen (12) bezüglich ihres Außendurchmessers zentrieren, wobei beide Aufnahmeeinrichtungen (1) auf einer Ausrichtungsbasis miteinander fluchtend und axial verschiebbar angeordnet sind, **dadurch gekennzeichnet, dass** an der Außenseite jeder Aufnahmeeinrichtung (1) ein verformbarer, ringförmiger, membranartiger Wärmetauscher angeordnet ist, der von einem Satz voneinander getrennter Blattlamellen (2) aus hitzebeständigem Material gebildet wird, deren unteres Ende für einen thermischen Kontakt mit der Ummantelung (12) angeordnet ist.

2. Vorrichtung nach Anspruch 1, bei der die Aufnahmeeinrichtungen (1) in Form von Profil-Ausrichtungsbuchsen ausgeführt sind.

3. Vorrichtung nach Anspruch 1 oder 2, bei der die Blattlamellen (2) wenigstens im Bereich ihrer unteren Enden im Abstand zur äußeren Oberfläche (9) der zylindrischen Aufnahmeeinrichtung (1) angeordnet sind.

4. Vorrichtung nach einem der vorigen Ansprüche, bei der der ringförmige Wärmetauscher mittels ihn umgebender Federringe (3, 4) und einer bewegbaren Anschlagbuchse (5), die mit den oberen Enden der Blattlamellen (2) in Kontakt steht, auf der Aufnahmeeinrichtung (1) angeordnet ist.

5. Vorrichtung nach einem der Ansprüche 1 bis 3, bei der die Blattlamellen (2) des Wärmetauschers entlang der Achse der Aufnahmeeinrichtung (1) ein Profil in Form eines Kipphebels aufweisen und in einer ringförmigen Querrille der Aufnahmeeinrichtung (1) mittels eines elastischen Federrings (4) befestigt sind.

6. Vorrichtung nach einem der Ansprüche 1 bis 3, bei der die unteren Enden der Blattlamellen (2) des membranartigen Wärmetauschers an der Seite der Schweißebene (14) Lippen aufweisen, die aneinander gedrückt sind und mittels eines elastischen Federrings (4) zusammengezogen sind, wobei sie zusammen mit der Anschlagbuchse (5) der Aufnahmeeinrichtung (1) eine Konstruktion in Form einer Zange bilden.

7. Vorrichtung nach einem der vorigen Ansprüche, bei der auf der Seite der Schweißebene (14) der Durchmesser der Innenfläche des ringförmigen, membranartigen Wärmetauschers, der von den Lippen der Blattlamellen (2) gebildet wird, gleich dem Außendurchmesser der zu schweißenden dünnwandigen zylindrischen Ummantelungen (12) ist.

8. Vorrichtung nach einem der vorigen Ansprüche, bei der die Blattlamellen (2) des membranartigen Wärmetauschers über die ganze Länge die gleiche Breite aufweisen.

9. Vorrichtung nach einem der vorigen Ansprüche, bei der die Stirnseite des membranartigen Wärmetauschers, die von den unteren Enden der Lamellen (2) gebildet wird, bezüglich der zu ihr am nächsten gelegenen Stirnseite der Aufnahmeeinrichtung (1) um einen Abstand, der gleich dem 5- bis 10-fachen der Dicke der zu schweißenden Teile ist, nach außen verschoben ist.

10. Vorrichtung nach Anspruch 4, bei der die bewegbare Anschlagbuchse (5) eine innere konische Oberfläche aufweist, die mit den oberen Enden der Blattlamellen (2) in Kontakt steht, wobei deren Konusspitze den Blattlamellen (2) des membranartigen Wärmetauschers abgewandt ist, und die Anschlagbuchse (5) parallel der Achse der Aufnahmeeinrichtung (1) verschiebbar ist.

## Claims

1. A device for welding the end faces of thin-walled sheathing (12) on a welding plane with two cylindrical positioning receptacles (1) which are centered to the thin-walled sheathing (12) to be welded relative to their outer diameter, with both receptacles (1) aligned to each other on an alignment base and axially displaceable; **characterized in that** on the outer side of each receptacle (1) there is a deformed, annular, membrane-type heat exchanger composed of lamellar sheets (2) separated from one another, which are made of a heat-resistant material and whose lower ends are arranged to be in thermal contact with the sheathing (12).

2. The device according to Claim 1, wherein the receptacles (1) are designed in the form of alignment bushings.

3. The device according to Claims 1 and 2, wherein the lamellar sheets (2) are arranged at a distance from the outer surface (9) of the cylindrical receptacles at least around their lower ends.

4. The device according to any preceding claim, wherein the annular heat exchanger is arranged on the receptacles (1) by means of spring washers (3, 4) and a movable stop sleeve (5) which is in contact with the upper ends of the lamellar sheets (2).

5. The device according to any one of Claims 1 to 3, wherein the lamellar sheets (2) in the heat exchanger have a profile in the form of a rocker arm along the axis of the receptacle (1) and are attached by means of an elastic spring washer (4) to the annular longitudinal rib of the receptacle (1).

6. The device according to any one of Claims 1 to 3, wherein the lower ends of the lamellar sheets (2) of the membrane-type heat exchanger have lips at the side of the welding plane (14) pressed against each other and drawn together by means of an elastic spring washer (4), where they form a structure along with the stop sleeve (5) and the receptacle (1) shaped like a pincer.

7. The device according to any preceding claim, wherein on the side of the welding plane (14) the diameter of the inner surface of the annular, membrane-type heat exchanger formed by the lips of the lamellar sheets (2) equals the outer diameter of the thin-walled cylindrical sheathing (12).

8. The device according to any preceding claim, wherein the lamellar sheets (2) of the membrane-type heat exchange have the same width over the entire length.

9. The device according to any preceding claim, wherein the end face of the membrane-type heat exchanger formed by the lower end of the lamellar sheets (2) is displaced outward, relative to the end face of the receptacle (1) closest to it, by a distance of five to ten times the thickness of the parts to be welded.

10. The device according to Claim 4, wherein the movable stop sleeve (5) has an inner conical surface in contact with the upper end of the lamellar sheets (2) while its conical tip faces away from the lamellar sheets (2) of the membrane-type heat exchanger, and the stop sleeve (5) is displaceable parallel to the axis of the receptacle (1).

## Revendications

1. Dispositif pour souder les faces d'extrémité d'une gaine à paroi mince (12) dans le plan de soudage avec deux récipients cylindriques de positionnement (1) centrés sur le revêtement à paroi mince (12) pour être soudés sur leur diamètre extérieur, avec les deux récipients (1) alignés l'un sur l'autre sur une base d'alignement et déplaçables axialement; **caractérisé en ce que**, sur le côté extérieur de chaque récipient (1), il existe un échangeur de chaleur à membrane, déformé et annulaire, composé de feuilles lamellaires (2) séparées l'une de l'autre, constituées d'un matériau résistant à la chaleur et dont les extrémités inférieures sont disposées pour être en contact thermique avec la gaine (12).

2. Dispositif selon la revendication 1, dans lequel les récipients (1) sont conçus sous la forme de douilles d'alignement.

3. Dispositif selon les revendications 1 et 2, dans lequel les feuilles lamellaires (2) sont disposées à distance de la surface extérieure (9) des récipients cylindriques, au moins autour de leurs extrémités inférieures.

4. Dispositif selon l'une quelconque des revendications précédentes, dans lequel l'échangeur de chaleur annulaire est disposé sur les récipients (1) au moyen de rondelles élastiques (3, 4) et d'un manchon d'arrêt déplaçable (5) qui est en contact avec les extrémités supérieures des feuilles lamellaires (2).

5. Dispositif selon l'une quelconque des revendications 1 à 3, dans lequel les feuilles lamellaires (2) dans l'échangeur de chaleur ont un profil sous la forme d'un culbuteur le long de l'axe du récipient (1) et sont fixées au moyen d'une rondelle élastique à ressort (4) sur la nervure annulaire longitudinale du récipient (1).

6. Dispositif selon l'une quelconque des revendications 1 à 3, dans lequel les extrémités inférieures des feuilles lamellaires (2) de l'échangeur de chaleur à membrane ont des lèvres au niveau du plan de soudage (14), celle-ci sont pressées l'une contre l'autre et tirées ensemble au moyen d'une rondelle élastique à ressort (4) et forment une structure avec le manchon d'arrêt (5) et le récipient (1) en forme une pince.

7. Dispositif selon l'une quelconque des revendications précédentes, dans lequel, au niveau du plan de soudage (14), le diamètre de la surface intérieure de l'échangeur de chaleur annulaire à membrane formé par les lèvres des feuilles lamellaires (2) est égal au diamètre extérieur de la gaine cylindrique à paroi mince (12).

8. Dispositif selon l'une quelconque des revendications précédentes, dans lequel les feuilles lamellaires (2) de l'échangeur de chaleur à membrane ont la même largeur sur toute la longueur.

9. Dispositif selon l'une quelconque des revendications précédentes, dans lequel la face d'extrémité de l'échangeur de chaleur à membrane formée par l'extrémité inférieure des feuilles lamellaires (2) est déplacée vers l'extérieur par rapport à la face d'extrémité du récipient (1) le plus proche, à une distance de cinq à dix fois l'épaisseur des pièces à souder.

10. Dispositif selon la revendication 4, dans lequel le manchon d'arrêt mobile (5) a une surface intérieure conique en contact avec l'extrémité supérieure des feuilles lamellaires (2) tandis que son extrémité conique est opposée aux feuilles lamellaires (2) de l'échangeur de chaleur à membrane et le manchon d'arrêt (5) est déplaçable parallèlement à l'axe du récipient (1).
